# EUROPÄISCHE PATENTSCHRIFT

(11) **EP 2 452 596 B1**
(45) Veröffentlichungstag und Bekanntmachung des Hinweises auf die Patenterteilung: **21.08.2013**
(21) Anmeldenummer: 11187294.1
(22) Anmeldetag: 31.10.2011
(51) Int. Cl.: A47J 31/44, A47J 31/56

(54) **Getränkezubereitungsmaschine mit Sensoranordnung**
Drink preparation machine with sensor assembly
Machine de préparation de boissons dotée d'un agencement de capteur

(30) Priorität: 12.11.2010 DE 102010043855
(43) Veröffentlichungstag der Anmeldung: 16.05.2012
(73) Patentinhaber: BSH Bosch und Siemens Hausgeräte GmbH, 81739 München (DE)
(72) Erfinder: Höglauer, Michael, 83246 Unterwössen (DE); Steffl, Michael, 83250 Marquartstein (DE)

(56) Entgegenhaltungen:
- WO-A1-2008/154698
- DE-A1-102006 060 747

## Beschreibung

Die Erfindung betrifft eine Getränkezubereitungsmaschine für Haushaltszwecke mit einem Aufnahmebereich zur Aufnahme mindestens eines ersten Ver- oder Entsorgungsbehälters und mit einer Sensoranordnung zur Erkennung eines ersten Befüllungszustandes der Getränkezubereitungsmaschine in Bezug auf den ersten Ver- oder Entsorgungsbehälter.

Getränkezubereitungsmaschinen, insbesondere Kaffee-Vollautomaten, weisen üblicherweise eine Mehrzahl von Ver- bzw. Entsorgungsbehältern auf. In einer Kaffeezubereitungsmaschine werden beispielsweise zur Versorgung einzelne Zutaten wie Frischwasser, Kaffeebohnen, Kaffeemehl, Brühkapseln oder Kaffeepads vorgehalten. Für Brüh- und Spülwasserreste und für feste Brühreste wie Tresterkuchen, verbrauchte Kaffeepads oder Brühkapseln sind meist Entsorgungsbehälter vorgesehen. In den Entsorgungsbehältern werden die Reste gesammelt, so dass sie erst nach mehreren Getränkezubereitungszyklen gemeinsam entsorgt worden können.

Um automatisch zu bestimmen, wann Zutaten nachgefüllt bzw. Entsorgungsbehälter geleert werden müssen, wird in vielen Getränkezubereitungsmaschinen die Anzahl der zubereiteten Getränkeeinheiten gezählt und bei Erreichen eines bestimmten Werts ein Ver- bzw. Entsorgungssignal ausgegeben, Diese Vorgehensweise ist relativ unpräzise, da öfter geleert wird als eigentlich notwendig. Deshalb gibt es Sensoranordnungen, die die Befüllung von Ver- bzw. Entsorgungsbehältern sensorisch abprüfen.

Die WO 2008/154698 A1 offenbart beispleisweise eine Kaffeemaschine mit einer "single serve funktion", d.h. einer Einrichtung, die es erlaubt zumindest noch eine Tasse Kaffee zu brühen, unerachtet des Füllstands des Wassertanks.

Der Einsatz von Sensoranordnungen aus einem Sender und einem Empfänger stößt oft an konstruktive Grenzen, weil sie oftmals schwierig im eng begrenzten Bauraum einer Getränkezubereitungsmaschine unterzubringen sind. In einem unteren Gehäusebereich wird Elektronik ungern angeordnet, weil dorthin regelmäßig Restflüssigkeiten zum Beispiel in Tropfschalen abgeleitet werden, die die Elektronik verschmutzen oder beschädigen könnten. Vom oberen Gehäusebereich aus kann hingegen ein Befüllungsgrad eines Behälters nur schwer erfasst werden.

Dieser Konflikt bei der räumlichen Anordnung der Sensorik in Getränkezubereitungsmaschinen wird noch verstärkt, wenn man nicht nur den Befüllungsgrad eines Ver- oder Entsorgungsbehälters, sondern zusätzlich beispielsweise seine korrekte Positionierung erfassen möchte. Erst recht gilt dies, wenn man mehrere Ver- bzw. Entsorgungsbehälter mit nur einer Sensoranordnung erfassen möchte,

Aufgabe der Erfindung ist die Angabe einer Getränkezubereitungsmaschine mit einer Sensoranordnung zur Erfassung mehrerer Informationen über den Befüllungszustand der Getränkezubereitungsmaschine bezüglich zumindest eines Behälters.

Diese Aufgabe wird bei einer Getränkezubereitungsmaschine der eingangs genannten Art gelöst durch eine in Abhängigkeit vom Befüllungszustand der Getränkezubereitungsmaschine betätigbare Hebelanordnung, die in einer bestimmten vordefinierten Steilung die Sensoranordnung so anregt, dass sie ein Erkennungssignal aktiviert. Erfindungsgemäß regt demnach die Hebelanordnung die Sensoranordnung an, leitet also eine Information an sie weiter.

Als Befüllungszustand der Getränkezubereitungsmaschine in Bezug auf einen Ver- bzw. Entsorgungsbehälter wird einerseits der Befüllungszustand der Getränkemaschine in Bezug auf die Zutaten wie Kaffeebohnen oder Frischwasser und in Bezug auf die Reststoffe wie Trester verstanden. Der Befüllungszustand bezieht sich damit auf den Befüllungszustand des entsprechenden Behälters selbst. Zum Befüllungszustand gehört jedoch auch der Zustand des Behälters in der Maschine, insbesondere im Aufnahmebereich, beispielsweise also, ob sich der Behälter überhaupt im Aufnahmebereich befindet oder ob er darin korrekt positioniert ist.

Eine Sensoranordnung kann aus einem einzelnen Sensor, beispielsweise in Form eines als Schalter ausgebildeten Kontaktsensors, oder aus mehreren, räumlich voneinander getrennten Bauteilen bestehen, die miteinander in einem Wirkungszusammenhang, zum Beispiel als Sender und Empfänger, stehen. Die Sensoranordnung wirkt als Erfassungsvorrichtung zur Meldung eines bestimmten Befüllungszustands - bei Versorgungsbehältern vorzugsweise des Zustands kurz vor der Komplettentleerung, bei Entsorgungsbehältern bevorzugt des Zustands kurz vor der Überfüllung.

Die Sensoranordnung wird erfingdungsgemäß direkt oder Indirekt durch eine Hebelanordnung angeregt, die Ausgabe eines Erkennungssignals - beispielsweise eines Warnsignals - zu aktivieren. Die Hebelanordnung kann in einem einfachen Fall aus einem einfachen einseitigen oder zweiseitigen Hebel bestehen. Sie kann auch statt eines um eine Achse schwenkbaren Hebens eine in mindestens eine Raumrichtung bewegbare Verschiebeanordnung umfassen. Eine solche Verschiebeanordnung kann beispielsweise eine Schubstange umfassen, die in einer Raumrichtung translatorisch verschiebbar in der Getränkezubereitungsmaschine angeordnet ist. Aufwändigere Hebelanordnungen können mehrere Hebel, Schubstangen und weitere damit mechanisch zusammen wirkende Elemente umfassen. Der Einfachheit halber ist im Folgenden gelegentlich nur von einem Hebel die Rede, auch wenn es sich um eine Hebelandordnung im obigen Sinne handeln kann.

Die Hebelanordnung überträgt ein Erkennungssignal mechanisch an den Ort, an dem sich die Sensoranordnung befindet, weil sie sich dort besonders vorteilhaft positionieren lässt. Erfindungsgemäß wird ein zweiseitiger Hebel durch das Gewicht eines Versorgungsbahälters an seinem einen Ende so bewegt werden, dass sein anderes Ende gegen einen Schalter drückt, der als Sensoranordnung fungiert. Anstatt den Schalter direkt unterhalb des Versorgungsbehälters zu positionieren, wo ihn Wasser und Verunreinigungen beinträchtigen können, wird er oberhalb des Behälters angeordnet und die Gewichtskraft durch Kraftumlenkung mittels des Hebels zu ihm hin gerichtet.

Besondere Vorteile entfaltet die Erfindung, wenn mindestens ein zweiter Ver- oder Entsorgungsbehälter im Aufnahmebereich vorhanden ist. Dabei erfasst gemäß einer bevorzugten Ausführungsform der Erfindung die Sensoranordnung neben einem ersten Befüllungszustand auch einen zweiten Befüllungszustand in Bezug auf den zweiten Ver- oder Entsorgungsbehälter. Die Sensoranordnung kann also beispielsweise die Befüllung eines Entsorgungsbehälters und zugleich die Positionierung eines Versorgungsbehälters gemeinsam überwachen. Die Erfassung von Informationen in Bezug auf den zweiten Ver- bzw. Entsorgungsbehälter kann ebenfalls mithilfe einer Hebelanordnung erfolgen, der die Sensoranordnung anregt, oder auch durch die Sensoranordnung selbst.

Gerade wenn zwei oder mehr Ver- und/oder Entsorgungsbehälter von einer einzigen Sensoranordnung überwacht werden sollen, ist die geeignete Positionierung der Sensoranordnung besonders schwierig. Die Weiterleitung von Signalen in Richtung der einen Sensoranordnung mittels einer Hebelanordnung ist daher besonders effektiv und vorteilhaft, da hierdurch eine zusätzliche Sensorik inklusive Signalgebung und Verkabelung ebenso entfällt wie deren Verbau innerhalb des Gehäuses der Getränkezubereitungsmaschine.

Gemäß einer ersten Variante ist die erfindungsgemäße Getränkezubereitungsmaschine mit einer durch das Gewicht des ersten Ver- oder Entsorgungsbehälters betätigbaren Hebelanordnung ausgestattet. Eine Gewichtserfassung ist einer optischen Erfassung in solchen Fällen überlegen, in denen transparente Füllgüter oder Behälter erfasst werden sollen, da die optische Erkennung auf sie nicht zuverlässig anspricht. Zudem bietet eine gewichtsabhängige Hebelbetätigung den Vorteil, dass ein durch ein Grenz-Gewicht definierter Schwellenwert gewählt werden kann, ab dem die Hebelanordnung bewegt wird. Der Schwellenwert ist herleitbar von einem Grenz-Befüllungszustand, der nicht über- bzw. unterschritten werden soll. Diese Logik ist durch eine einfache mechanische, gewichtsbasierte Hebelanordnung reproduzierbar angelegt und somit besonders fehlerunanfällig und einfach in der Konstruktion und Handhabung.

Besonders bevorzugt ist der erste Ver- oder Entsorgungsbehälter im Betriebszustand der Maschine vertikal bewegbar gelagert. Der erste Ver- oder Entsorgungsbehälter kann in einem Befüllungszustand der Maschine in einer vertikalen Einsetzrichtung in deren Aufnahmebereich eingesetzt werden. Nach dem Schließen der Maschine befindet sie sich dann im Betriebszustand, in dem der erste Ver- oder Entsorgungsbehälter von außen weitgehend unzugänglich ist. Dennoch ist er auch weiterhin vertikal zwischen mindestens zwei unterschiedlichen Positionen bewegbar. Seine Abwärtsbewegung kann durch sein zunehmendes Gewicht bei fortschreitender Befüllung hervorgerufen werden, die eine Bewegung der Hebelanordnung auslöst.

Gemäß einer zweiten, alternativ oder ergänzend einsetzbaren Variante ist die Hebelanordnung in Abhängigkeit von einer Füllhöhe des Inhalts des ersten Ver- oder Entsorgungsbehälters betätigbar. Die Hebelanordnung kann zum Beispiel mit einem Schwimmer in einem Flüssigkeitsbehälter verbunden sein. Anstatt indirekte Kriterien wie das Füllgewicht eines Behälters zu berücksichtigen, wird durch Messung der Füllhöhe direkt die kritische Messgröße ermittelt, die für den Betrieb, die Sicherheit und Sauberkeit der Maschine die entscheidende Rolle spielt: Würde eine maximale Füllhöhe eines Entsorgungsbehälters überschritten, so würde die Maschine verschmutzt. Bei Unterschreiten einer minimalen Füllhöhe eines Versorgungsbehälters dagegen könnte kein Getränk mehr zubereitet werden.

Eine dritte, ebenfalls alternativ oder ergänzend einsetzbare Variante besteht in einer Hebelanordnung, die in Abhängigkeit von einer Positionierung des ersten Ver- oder Entsorgungsbehälters betätigbar ist. Das Erfassungskriterium ist hier die Position des Behälters, worunter auch das Vorhandensein desselben im Aufnahmebereich fällt. Liegt die korrekte Positionierung des Behälters nämlich nicht vor, so ist die Ermittlung seines Befüllungszustandes zunächst vollkommen irrelevant, da nicht betriebsgemäß befüllt bzw. geleert werden kann. Die Berücksichtigung seiner Positionierung stellt somit sicher, dass wesentliche Voraussetzungen zum sicheren Betrieb der Maschine erfüllt sind.

Die Betätigung der Hebelanordnung in Abhängigkeit von einer Positionierung des ersten Ver- oder Entsorgungsbehälters erfolgt gemäß einer besonders bevorzugten Weiterbildung der Erfindung durch eine Hebelanordnung, die beim Positionieren des ersten Ver- oder Entsorgungsbehälters in dessen Bestimmungsposition durch ein Gehäuseteil des ersten Ver- oder Entsorgungsbehälters betätigt wird. Das Behältergehäuse berührt dazu die Hebelanordnung und lenkt sie während des Positionierens in eine andere Stellung als vor der Positionierung des Behälters. Das direkte physische Zusammenwirken des Behältergehäuses und der Hebelanordnung ist einfach herzustellen, indem der Hebel in einem Zustand der Getränkemaschine ohne den Behälter mit einem Ende in einen Bereich reicht, in dem das Gehäuse des Behälters in seiner Zielposition positioniert ist.

Gemäß einer weiteren vorteilhaften Weiterbildung der Erfindung ist ein Entsorgungsbehälter als Resfiivasserbehälter ausgebildet. Der Füllstand von Restwasser ist relativ schwierig ermittelbar, weshalb die erfindungsgemäße Methode hier im Besonderen ihre vorteilhafte Wirkung der einfachen Messung bei relativ beliebiger Anordnung der Elemente der Sensoranordnung entfalten kann. Außerdem ist die Ermittlung des Befüllungszustands von Flüssigkeitsbehältern, insbesondere von Behältern für verunreinigte Flüssigkeiten deshalb so wichtig, weil verunreinigtes Wasser zu erheblichen Schäden im Betrieb eines elektrischen Geräts führen kann.

Da der Füllstand in einem Restwasserbehälter mit optischen Sensorsystemen nur schwer erkannt werden kann, ist die Verwendung von mechanischen Mitteln effektiver und verlässlicher. Beispielsweise können schwimmer- oder gewichtsbasierte Hebelanordnungen verwendet werden. Ein zweiseitiger Hebel an einem Schwimmer im Restwasser wird an seinem anderen Ende mit steigendem Wasserpegel nach unten gedrückt, ein gewichtsbasiert bewegter Hebel dagegen nach oben. Je nach möglicher Position der Sensoranordnung kann die eine oder andere Ausgestaltung der Bewegung des Hebels vorteilhafter sein.

Eine weitere - alternativ oder ergänzend vorgesehene - Weiterbildung der Erfindung besteht darin, dass ein Entsorgungsbehälter als Behälter für feste Brühreste ausgebildet ist. Auch hier handelt es sich also um einen Entsorgungsbehälter, der nicht überfüllt werden soll. Die Erkennung des Befüllungszustands von Entsorgungsbehältern ist entscheidend, denn bei Überfüllung kann ggf. die Maschine bleibenden technischen Schaden nehmen und auf jeden Fall so verschmutzt werden, dass sie aufwändig gereinigt werden muss. Oftmals wird der Behälter für feste Brühreste in Kombination mit einem Restwasserbehälter in demselben Aufnahmebereich vorgehalten. Insofern ist auch die kombinierte Überwachung dieser beiden Behälter besonders sinnhaft, da es sich in beiden Fällen um Entsorgungsbehälter handelt, die gemeinsam entleert werden können.

Neben einfachen mechanischen Sensoranordnungen können je nach geforderter sensorischer Feinheit und in Abhängigkeit vom zur Verfügung stehenden Bauraum der Maschine unterschiedliche Sensorsysteme zum Einsatz kommen; bevorzugt handelt es sich dabei um eine optische Sensoranordnung, in deren Messbereich sich die Hebelanordnung in der vordefinierten Stellung befinden kann.

Eine optische Sensoranordnung, zum Beispiel eine Video-Überwachung mit subtraktiver Bilderkennungslogik, stellt ein Eindringen der Hebelanordnung in ihren Messbereich, d. h. in den von ihr optisch erfassten Bereich, fest. Eine sehr vorteilhafte, weil ohne großen Materialaufwand und wartungsarm zu realisierende Ausgestaltung einer optischen Sensoranordnung besteht aus einer Lichtschrankenanordnung, die von der Hebelanordnung in der vordefinierten Stellung unterbrochen ist.

In Analogie zur optischen Form der Lichtschranke können auch mechanische Systeme verwendet werden, bei denen zwei voneinander beabstandete Mess- und/oder Sendepunkte miteinander so verbunden sind, dass ein Eindringen eines Objekts in dem Raum zwischen den beiden Mess- und/oder Sendepunkten das Erkennungssignal auslöst. Dies kann zum Beispiel mittels eines zwischen zwei Sensorelementen gespannten Drahts realisiert sein, der bei Berührung durch die Hebelanordnung noch stärker gespannt wird und dadurch eine höhere Kraft auf die beiden Sensorelemente ausübt. Diese Krafterhöhung wird von den Sensorelementen registriert und als Betätigungssignal ausgewertet.

Alternativ oder ergänzend zu einer optischen Sensoranordnung kann außerdem eine kapazitive Sensoranordnung in der Getränkezubereitungsmaschine vorgesehen sein. Eine kapazitive Sensoranordnung ist bevorzugt so ausgebildet, dass sie im Betrieb ein Vorhandensein von Flüssigkeiten, insbesondere Wasser, in ihrem Messbereich erfasst. Sie kann zum Beispiel als Kondensator realisiert sein. Hieran angeschlossen wird eine Auswertungselektronik zur Bestimmung einer Änderung des elektrischen Felds des Kondensators, aus der sich Rückschlüsse ziehen lassen über Störfaktoren des Felds. Ein Störfaktor können beispielsweise Flüssigkeiten sein. Dadurch kann bei entsprechender Feineinstellung der Auswertungselektronik erkannt werden, ob sich eine bestimmte Flüssigkeit im Messbereich des Kondensators befindet. Eine kapazitive Sensoranordnung eignet sich daher insbesondere zur Erkennung, ob Restwasser oder Frischwasser in dem dafür vorgesehenen Behälter eine bestimmte Füllhöhe über- bzw. unterschritten hat. Es lassen sich mit dieser Art von Sensorik jedoch auch andere Befüllungen des Behälters, etwa Trester (aufgrund seines Restwassergehalts) oder leere Brühkapseln erkennen. Statt einer Flüssigkeitserkennung kann jedoch prinzipiell auch die Erkennung bestimmte Feststoffe oder gar Gase vorgesehen sein. Dies kann über eine entsprechende Feineinstellung der Auswertungselektronik auf die Erkennung ebendieser Stoffe bzw. daraus gebildeter Gegenstände realisiert werden.

Eine bevorzugte Weiterbildung der Getränkezubereitungsmaschine besteht in einer zweiten Hebelanordnung, die in einer bestimmten vordefinierten Stellung die Sensoranordnung so anregt, dass sie ein Erkennungssignal aktiviert. Die zweite Hebelanordnung kann beispielsweise zur Füllstands-Erkennung eines zweiten Ver- oder Entsorgungsbehälters dienen oder dazu, wie oben erwähnt, zusätzlich eine fehlerhafte Positionierung oder ein Fehlen des ersten und/oder zweiten Ver- bzw. Entsorgungsbehälters, zu ermitteln und anzuzeigen. Auch die zweite Hebelanordnung regt dieselbe Sensoranordnung an, so dass zur Berücksichtigung eines weiteren Messkriteriums ausschließlich die Bereitstellung und Anbringung dieser Hebelanordnung in der Maschine genügt.

Das Prinzip der Erfindung wird im Folgenden anhand einer Zeichnung beispielshalber noch näher erläutert. In der Zeichnung zeigen:
- Figur 1: eine perspektivische Ansicht eines ersten Ausführungsbeispiels einer erfindungsgemäßen Getränkezubereitungsmaschine in einem ersten Befüllungszustand,
- Figur 2: eine Schnittansicht entlang einer Schnittlinie A-A gemäß Figur 1,
- Figur 3: eine Schnittansicht entlang einer Schnittlinie B-B gemäß Figur 1,
- Figur 4: eine perspektivische Ansicht derselben Getränkezubereitungsmaschine wie in den vorhergehenden Figuren in einem zweiten Befüllungszustand,
- Figur 5: eine Schnittansicht entlang einer Schnittlinie A-A gemäß Figur 4,
- Figur 6: eine Schnittansicht entlang einer Schnittlinie B-B gemäß Figur 4,
- Figur 7: eine Schnittansicht derselben Getränkezubereitungsmaschine wie in den vorhergehenden Figuren entlang der Schnittlinie B-B in einem dritten Befüllungszustand,
- Figur 8: eine perspektivische Ansicht eines zweiten Ausführungsbeispiels einer erfindungsgemäßen Getränkezubereitungsmaschine,
- Figur 9: eine Schnittansicht entlang einer Schnittlinie D-D gemäß Figur 8 mit der Getränkezubereitungsmaschine in einem ersten Befüllungszustand,
- Figur 10: eine Schnittansicht entlang einer Schnittlinie C-C gemäß Figur 8 mit der Getränkezubereitungsmaschine in einem zweiten Befüllungszustand,
- Figur 11: eine Schnittansicht entlang einer Schnittlinie C-C gemäß Figur 8 mit der Getränkezubereitungsmaschine in einem dritten Befüllungszustand.

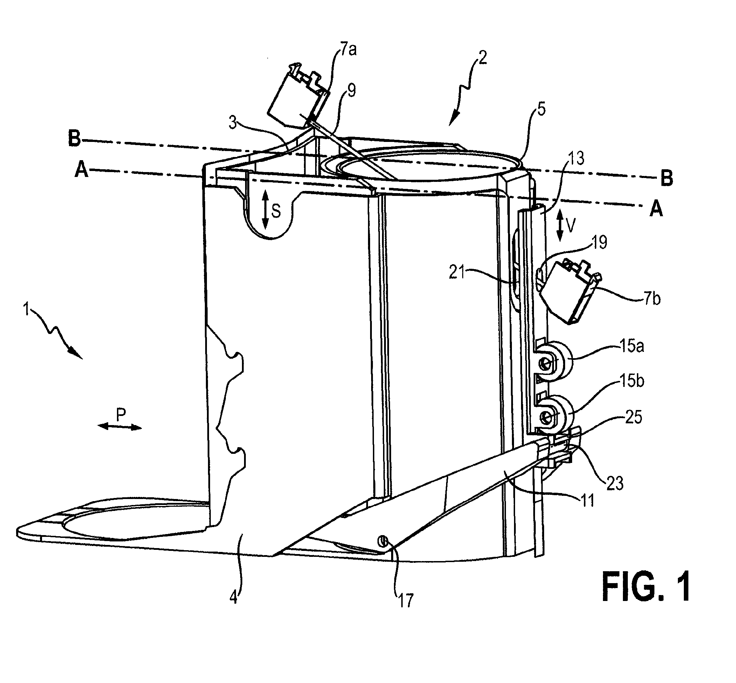

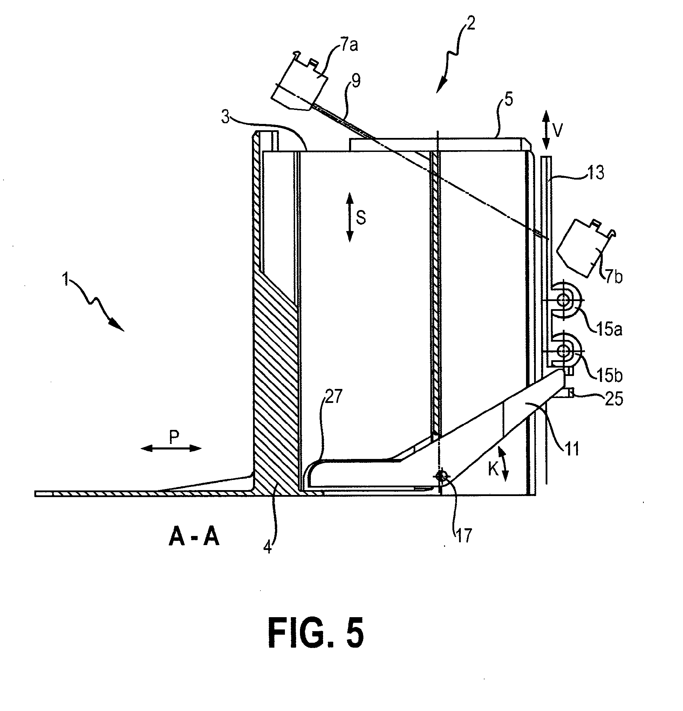

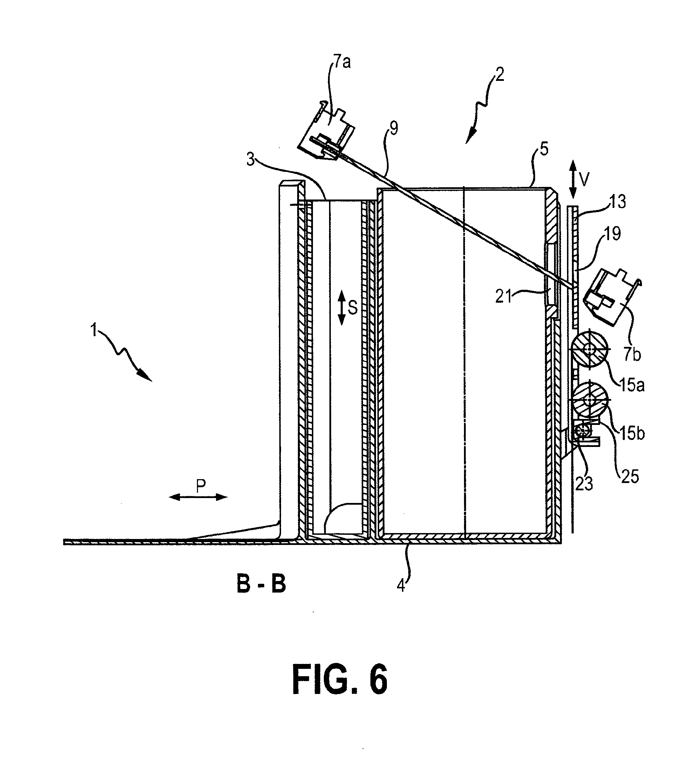

Figuren 1 bis 7 zeigen eine Kaffeemaschine 1 als Getränkezubereitungsmaschine gemäß einem ersten Ausführungsbeispiel der Erfindung, wobei nur Teile des Gehäuses abgebildet sind.

Den Entsorgungsbereich der Kaffeemaschine 1 bildet eine in Schubrichtung P verschiebbare Schublade mit einem Schubladengehäuse 4, die einen nach oben geöffneten Hohlraum ausbildet, der als Aufnahmebereich 2 dient. In dem Aufnahmebereich 2 befinden sich zwei Entsorgungsbehälter, nämlich ein Restwasser-Entsorgungsbehälter 3 und ein Kapsel-Entsorgungsbehälter 5. Bei anderen Ausführungsformen von Kaffeemaschinen, die nicht auf Basis von Kapselsystemen arbeiten, kann an die Stelle des Kapsel-Entsorgungsbehälters 5 ein Trester- bzw. ein Kaffeepad-Entsorgungsbehälter treten.

Um den Befüllungszustand der beiden Entsorgungsbehälter 3, 5 überwachen zu können, ist eine Sensoranordnung, bestehend aus einer Licht-Sendeeinheit 7a und einer Detektionseinheit 7b innerhalb der Kaffeemaschine 1 angebracht. Die Darstellung zeigt ihre Lage im Raum, nämlich eine Anordnung der Licht-Sendeeinheit 7a oberhalb des Aufnahmebereichs 2 und eine Positionierung der Detektionseinheit 7b schräg dazu nach unten versetzt, seitlich des Aufnahmebereichs 2. Beide Einheiten 7a, 7b sind mithilfe oberseitiger Federklemmen in Aussparungen (nicht dargestellt) im Inneren des Gehäuses der Kaffeemaschine 1 fixiert und über elektrische Anschlüsse mit der Elektronik der Kaffeemaschine 1 verbunden. Die Einheiten 7a, 7b senden bzw. empfangen einen Lichtstrahl 9, so dass sie eine Lichtschranke bilden.

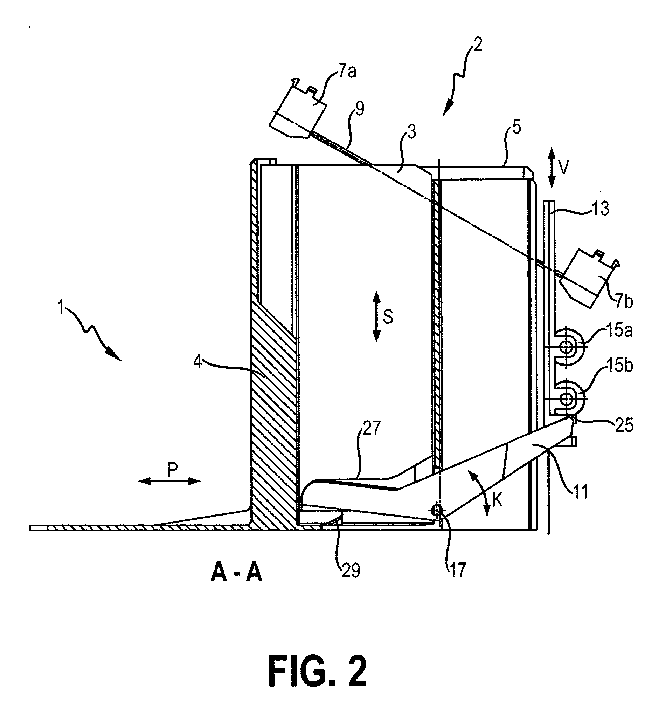

Eine Hebelanordnung, hier ausgebildet als zweiseitiger Hebel 11 ist entlang einer Achse, die durch je einen Hebelpunkt 17 an beiden Seiten des Schubladengehäuses 4 gebildet ist, in einer Kipprichtung K (Figur 2) schwenkbar. Hierzu ist der Hebel 11 gabelartig ausgebildet und umschließt den Kapsel-Entsorgungsbehälters 5. Der Hebel 11 ragt linkerhand im unteren Bereich des Restwasser-Entsorgungsbehälters 3 in das Schubladengehäuse 4 hinein und kann bei einem höheren Gewicht des Restwasser-Entsorgungsbehälters 3 nach unten gedrückt werden. Hierzu ist der Restwasser-Entsorgungsbehälter 3 in einer vertikalen Bewegungsrichtung S bewegbar angeordnet. Im hier dargestellten Zustand ist der Restwasser-Entsorgungsbehälter 3 nicht mit Restwasser gefüllt, so dass sich der Hebel 11 linkerhand in einer oberen Stellung befindet.

Rechterhand, an seinem anderen, dem Restwasser-Entsorgungsbehälter 3 entgegen gesetzten Hebelarm, ist der Hebel 11 mit einer in vertikaler Richtung V verschiebbaren Schubstange 13 über eine Achse 23 gelenkig verbunden. Hierzu weist die Schubstange 13 eine offene Buchse 25 auf, in der die Achse 23 gelagert ist. Zwei Führungsrollen 15a, 15b an der Schubstange 13 dienen der Führung der Bewegung der Schubstange 13 im Inneren des Gehäuses der Kaffeemaschine 1. Außerdem weist die Schubstange 13 eine Öffnung 19 auf, ebenso wie das Schubladengehäuse 4 und der Kapsel-Entsorgungsbehälter 5, die gemeinsam eine Durchlassöffnung 21 in etwa auf derselben Höhe wie die Öffnung 19 aufweisen. Die Öffnung 19 ist in vertikaler Richtung kleiner dimensioniert als die Durchlassöffnung 21.

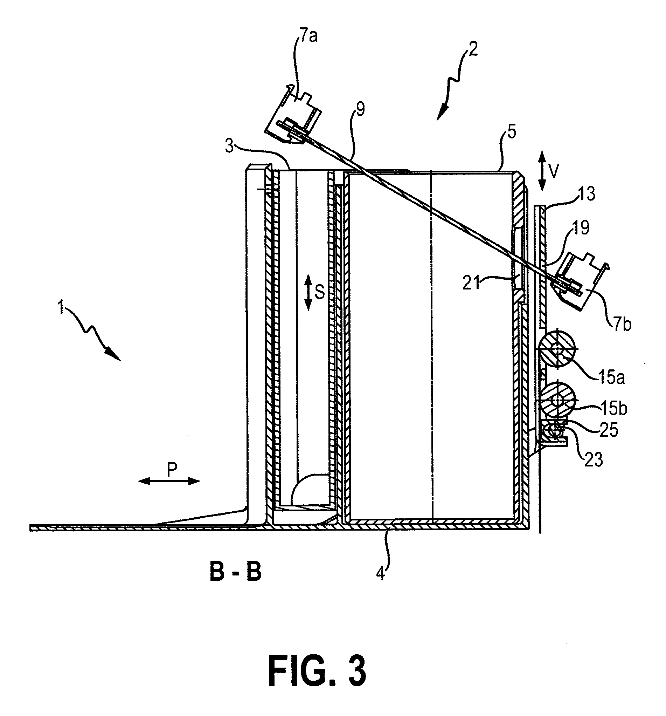

In der hier dargestellten Position des Hebels 11 und damit der Schubstange 13 kann der Lichtstrahl 9 durch die Öffnung 19 und die Durchlassöffnung 21 hindurch gelangen, so dass es durch keine Hindernisse blockiert wird. Die Sensoranordnung 7a, 7b generiert ein Nullsignal, was bedeutet, dass sie kein Erkennungssignal aussendet. Die Position des Hebels 11 korrespondiert dabei mit dem niedrigen Füllstand des Restwasser-Entsorgungsbehälters 3. Wie in Figur 3 erkennbar ist, kann der Lichtstrahl 9 auch durch eine Füllung des Kapsel-Entsorgungsbehälters 5 über einen bestimmten Bereich hinaus unterbrochen werden. Dies bedeutet, dass ein Nullsignal nur dann von der Sensoranordnung generiert wird, wenn weder der Kapsel-Entsorgungsbehälter 5 über ein bestimmtes Maß gefüllt ist noch der Restwasser-Entsorgungsbehälter 3 ein gewisses Gewicht überschreitet.

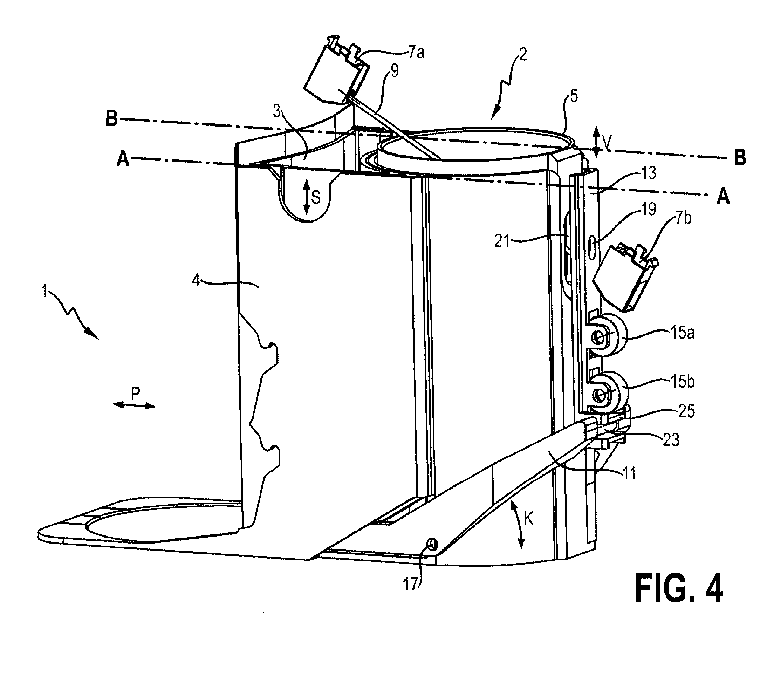

Den Zustand der Kaffeemaschine 1 bei Überschreiten eines Gewichts-Schwellenwerts durch den Restwasser-Entsorgungsbehälter 3 zeigen die Figuren 4 bis 6.

Durch das Gewicht des Restwasser-Entsorgungsbehälters 3 ist der Hebel 11 hier in einer Schwenkposition, bei der sein linker, unterhalb des Resfiivasser-Entsorgungsbehälters 3 angeordneter Hebelarm nach unten gedrückt ist. Dadurch ist die Schubstange 13 nach oben verschoben, so dass ihre Öffnung 19 oberhalb des Strahlengangs des Lichtstrahls 9 liegt. Die Schubstange 13 unterbricht damit den Lichtstrahl 9. Die Sensoranordnung 7a, 7b generiert nun statt des Nullsignals ein Erkennungssignal, aufgrund dessen beispielsweise eine Warnlampe aufleuchtet und/oder eine Blockade weiterer Brühungsvorgänge der Kaffeemaschine 1 ausgelöst wird.

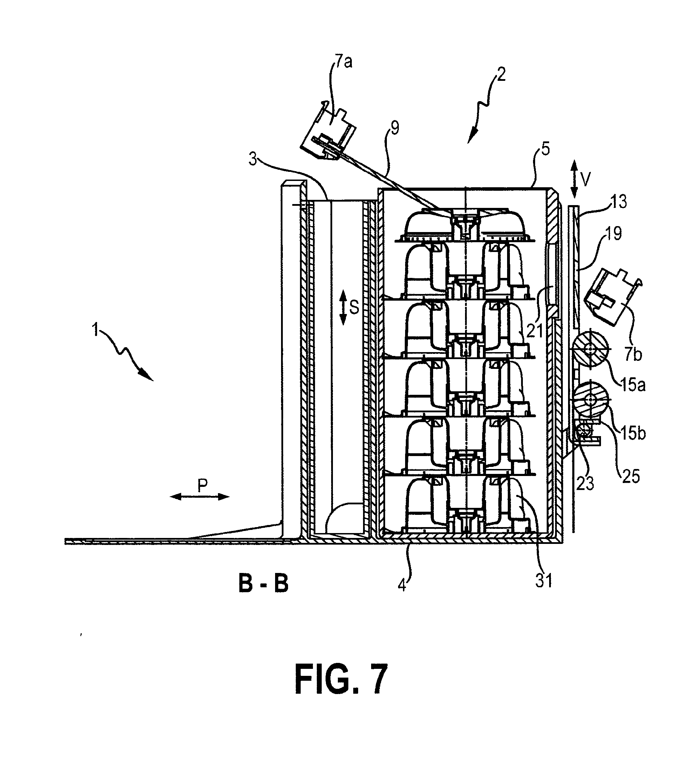

Figur 7 zeigt den Zustand der Kaffeemaschine 1 bei Überschreiten eines Gewichts-Schwellenwerts durch den Restwasser-Entsorgungsbehälter 3 und bei gleichzeitiger Überschreitung einer Höchst-Befüllungsgrenze des Kapsel-Entsorgungsbehälters 5. Dabei ist erkennbar, dass der Strahlengang des Lichtstrahls 9 nun sowohl durch die Schubstange 13 in ihrer nach oben verschobenen Position unterbrochen ist als auch durch entsorgte Brühgetränke-Kapseln 31 im Kapsel-Entsorgungsbehälter 5. Auch in diesem Falle generiert die Sensoranordnung ein Erkennungssignal - wie im Übrigen auch in einem Falle, in dem nur der Kapsel-Entsorgungsbehälter 5 über eine Höchst-Befüllungsgrenze hinaus befüllt ist, während der Restwasser-Entsorgungsbehälter 3 aufgrund eines niedrigeren Gewichts in einer höheren Position angeordnet ist.

Die Sensoranordnung 7a, 7b kontrolliert somit die Befüllungszustände beider Behälter zugleich. Den Entsorgungsbehälter 5 erfasst sie direkt, dadurch dass das durch sie gesendete und empfangene Licht den Entsorgungsbehälter 5 durchläuft. Den Befüllungszustand des Restwasser-Entsorgungsbehälters 3 erfasst sie indirekt. Diese indirekte Erfassung basiert auf der Bewegung des Hebels 11, der die Schubstange 13 so verschiebt, dass die Öffnung 19 nicht mehr mit dem Ort des Strahlengangs des Lichtstrahls 9 übereinstimmt.

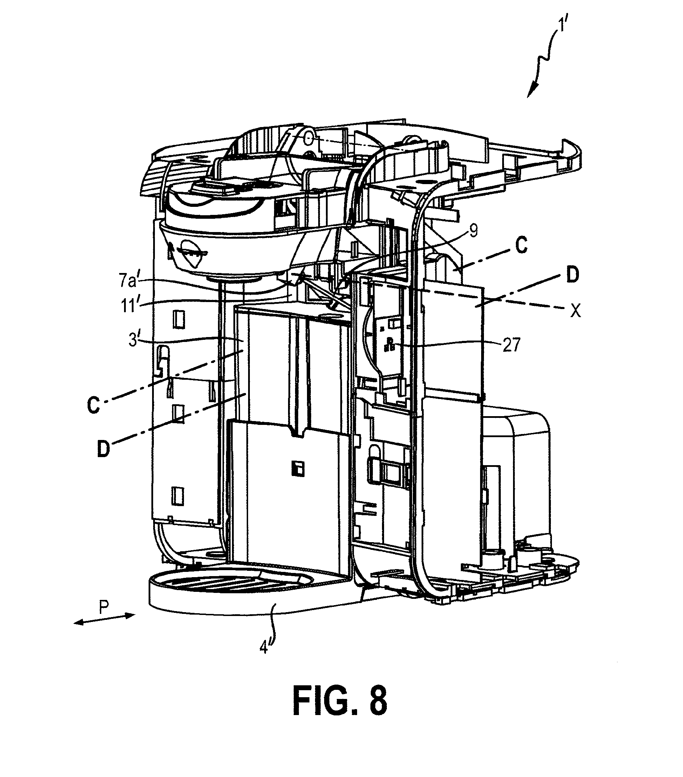

Figuren 8 bis 11 zeigen eine Kaffeemaschine 1' als Getränkezubereitungsmaschine gemäß einer zweiten Ausführungsform der Erfindung, wobei nur Teile des Gehäuses abgebildet sind.

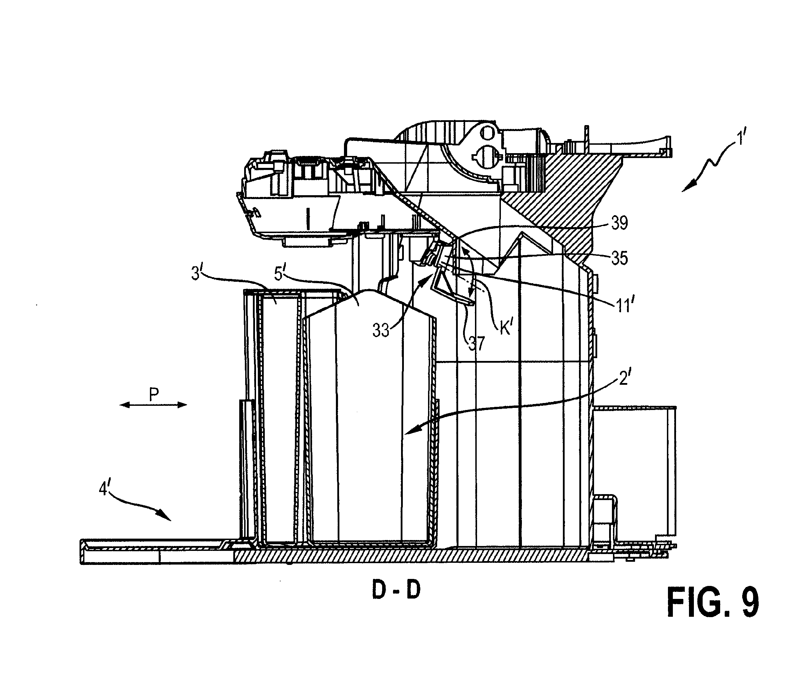

Der Entsorgungsbereich der Kaffeemaschine 1' ist analog zu dem der Kaffeemaschine 1 des im Zusammenhang mit den Figuren 1 bis 7 beschriebenen Ausführungsbeispiels ausgebildet. Der Abgrenzung halber sind die im nun vorliegenden Ausführungsbeispiel verwendeten Elemente im Versorgungsbereich jeweils mit einem Zeichen "' " versehen. Dies betrifft das Schubladengehäuse 4', den Aufnahmebereich 2' (Figur 9), den Restwasser-Entsorgungsbehälter 3' und den Kapsel-Entsorgungsbehälter 5'. Die Unterschiede in der Ausführungsform (neben einzelnen Geometrien und Anordnungen der eben genannten Bauteile) werden im Folgenden erläutert.

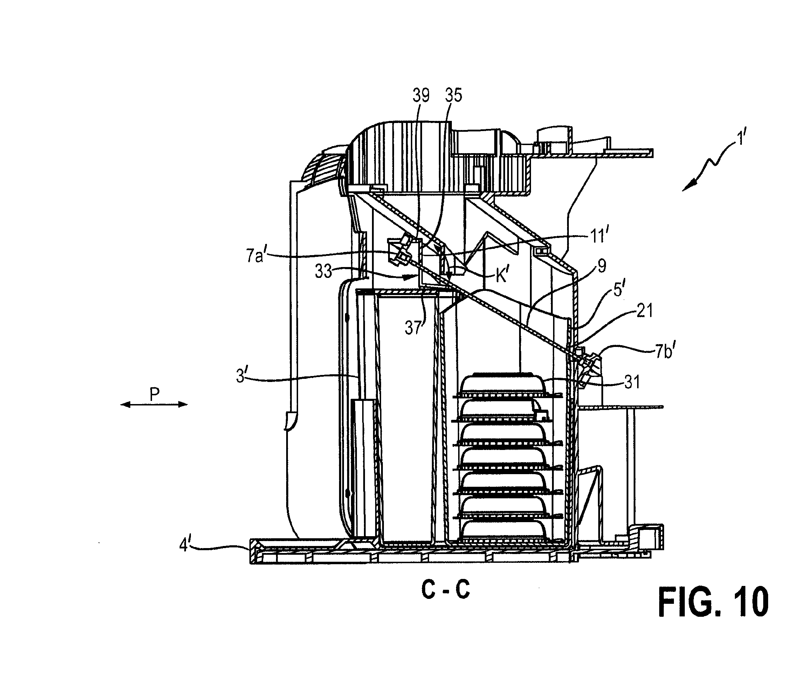

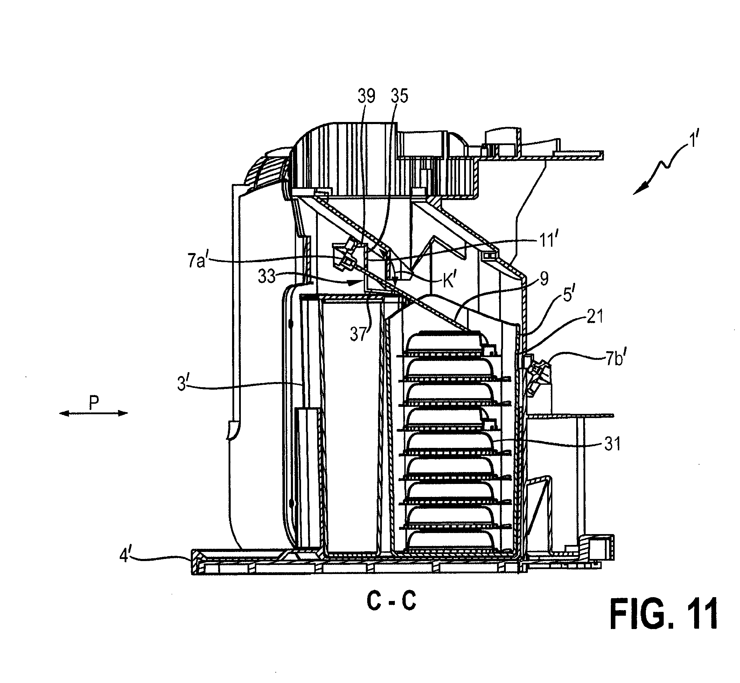

Um den Befüllungszustand des Aufnahmebereichs 2' und des Kapsel-Entsorgungsbehälters 5' überwachen zu können, ist eine Sensoranordnung, bestehend aus einer Licht-Sendeeinheit 7a' und einer Detektionseinheit 7b' (Figuren 10 und 11) innerhalb der Kaffeemaschine 1' angebracht. Die Licht-Sendeeinheit 7a' ist oberhalb des Aufnahmebereichs 2' angeordnet, die Detektionseinheit 7b' schräg dazu nach unten versetzt, seitlich des Aufnahmebereichs 2'. Beide Einheiten 7a', 7b' sind mithilfe oberseitiger Federklemmen in Aussparungen (nicht dargestellt) im Inneren des Gehäuses der Kaffeemaschine 1' fixiert und über elektrische Anschlüsse mit der Elektronik der Kaffeemaschine 1' verbunden. Die Einheiten 7a', 7b' senden bzw. empfangen einen Lichtstrahl 9, so dass sie eine Lichtschranke bilden.

Außerdem weist die Kaffeemaschine 1' eine kapazitive Sensoranordnung 27 auf, die ein Kondensatorelement und eine Auswertungselektronik umfasst. Mithilfe der kapazitiven Sensoranordnung 27 wird deren Erfassungs- oder Messbereich überwacht. Bei dieser Überwachung lässt sich erkennen, ob sich im Erfassungsbereich Flüssigkeiten, hier speziell Restwasser im Restwasser-Entsorgungsbehälter 3', befinden. Dies wird dadurch realisiert, dass Wasser die Kapazität des Kondensatorelements beeinflusst, woraus die Auswertungselektronik ein Erkennungssignal ableitet. Ändert sich also die Kapazität des Kondensatorelements, so leitet die Auswertungselektronik je nach dem ermittelten Kapazitätswert die Information ab, ob Wasser im Erfassungsbereich der kapazitiven Sensoranordnung 27, genauer: des Kondensatorelements, vorhanden ist. Im vorliegenden Fall, in dem so der Befüllungszustand des Restwasser-Entsorgungsbehälters 3' ermittelt werden soll, generiert die Auswertungselektronik ein Erkennungssignal, wenn Restwasser im Erfassungsbereich der kapazitiven Sensoranordnung 27 erfasst wird. Eine solche kapazitive Sensoranordnung kann jedoch auch dazu genutzt werden, einen kritisch niedrigen Befüllungszustand eines Versorgungsbehälters, etwa eines Frischwassertanks, zu erfassen. In diesem Falle würde ein Alarmsignal dann von einer Auswertungselektronik abgegeben, wenn kein Wasser in dem Erfassungsbereich des korrespondierenden Kondensators mehr ermittelt werden könnte.

Ein Hebel 11' ist benachbart zu der Licht-Sendeeinheit 7a' angebracht. Er ist entlang einer Achse X in einer Kipprichtung K' schwenkbar. Der Hebel 11' weist eine L-Form auf mit einem ersten Schenkel 35 und einem senkrecht dazu stehenden zweiten Schenkel 37. Am dem dem zweiten Schenkel 37 gegenüberliegenden Ende des ersten Schenkels 35 ist eine Verlängerung 39 in Richtung der Achse X angebracht. Der erste Schenkel weist eine seitliche Aussparung 33 in seiner Fläche auf, so dass er sich in dem auf den zweiten Schenkel 37 zulaufenden Bereich verjüngt.

Figur 9 zeigt die Kaffeemaschine 1' in einem ersten Befüllungszustand, in dem das Schubladengehäuse 4' teilweise aus dem Maschinengehäuse herausgezogen ist. Durch die Schwerkraft befindet sich der Hebel 11' in einer Kippposition unten, d.h. sein zweiter Schenkel 37 ragt in einen Innenbereich des Gehäuses hinein, der an sich im Betriebszustand der Kaffeemaschine 1' dem Gehäuse des Restwasser-Entsorgungsbehälters 3' vorbehalten ist. In dieser Kippposition ragt der obere Teil des ersten Schenkels 35, d.h. der Bereich, in dem keine Aussparung 33 vorhanden ist, so weit nach unten, dass er den Strahlengang des Lichtstrahls 9 unterbricht. Die Sensoranordnung 7a', 7b' generiert statt eines Nullsignals ein Erkennungssignal, aufgrund dessen beispielsweise eine Warnlampe aufleuchtet und/oder eine Blockade weiterer Brühungsvorgänge der Kaffeemaschine 1' ausgelöst wird.

Figur 10 zeigt die Kaffeemaschine 1' in einem zweiten Befüllungszustand, in dem sich das Schubladengehäuse 4' in Betriebsposition befindet und in dem der Kapsel-Entsorgungsbehälter 5' nur mit einigen wenigen verbrauchten Brühgetränke-Kapseln 31 gefüllt ist. In dieser Position drückt das Gehäuse des Restwasser-Entsorgungsbehälters 3' den Hebel 11' mit dem zweiten Schenkel 37 so weit nach oben, dass der Lichtstrahl 9 der Lichtschranke die Aussparung 33 des ersten Schenkels 35 durchläuft. Die Lichtschranke ist somit nicht mehr durch den Hebel 11' unterbrochen. Durch eine Durchlassöffnung 21 im Kapsel-Entsorgungsbehälter 5' gelangt das Licht weiter zur Detektionseinheit 7b'. Die Sensoranordnung 7a', 7b' generiert ein Nullsignal, das anzeigt, dass sich der Restwasser-Entsorgungsbehälter 3' in seiner bestimmungsgemäßen Position befindet und dass der Kapsel-Entsorgungsbehälter 5' keinen kritischen Befüllungszustand aufweist.

Figur 11 zeigt dieselbe Kaffeemaschine 1' in einem dritten Befüllungszustand, der sich von dem in Figur 10 gezeigten dadurch unterscheidet, dass sich noch mehr Brühgetränke-Kapseln 31 im Kapsel-Entsorgungsbehälter 5' befinden. Der Kapsel-Entsorgungsbehälter 5' sollte daher geleert werden, um im Betrieb der Kaffeemaschine 1' Verstopfungen zu vermeiden. Durch die zuoberst liegende der Brühgetränke-Kapseln 31 wird der Strahlengang des Lichtstrahls 9 unterbrochen, so dass die Sensoranordnung 7a', 7b' analog zum in Figur 9 gezeigten Zustand wiederum ein Erkennungssignal erzeugt.

Zusammenfassend lässt sich für die anhand der Figuren 8 bis 11 beschriebene Ausführungsform der Erfindung feststellen, dass der Befüllungszustand des Kapsel-Entsorgungsbehälters 5' durch die optische Sensoranordnung 7a', 7b' ermittelt wird und der Befüllungszustand des Restwasser-Entsorgungsbehälters 3' mit der kapazitiven Sensoranordnung 27. Außerdem wird die Präsenz des Restwasser-Entsorgungsbehälter 3' durch die Kombination der optischen Sensoranordnung 7a', 7b' mit dem Hebel 11' ermittelt. Auch die Verwendung eines zweiten, ähnlich aktivierbaren Hebels zur Unterbrechung der Lichtschranke bei Fehlen des Kapsel-Entsorgungsbehälters 5' ist möglich. Da jedoch Restwasser erheblich größere Verunreinigungen verursacht und damit ein höheres Betriebsrisiko darstellt als verbrauchte Brühgetränke-Kapseln 31, wurde die Sensorik hier zielgerichtet zur Erkennung des Restwasser-Entsorgungsbehälters 3' benutzt.

Da es sich bei den vorhergehenden, detailliert beschriebenen Entsorgungsbehältern um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Getränkezubereitungsmaschine in anderer Form als in der hier beschriebenen folgen. Ebenso kann der Aufnahmebereich in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1, 1': Getränkezubereitungsmaschine - Kaffeemaschine
- 2, 2': Aufnahmebereich
- 3, 3': Restwasser-Entsorgungsbehälter
- 4, 4': Schubladengehäuse
- 5, 5': Kapsel-Entsorgungsbehälter
- 7a, 7a': Licht-Sendeeinheit
- 7b, 7b': Detektionseinheit
- 9: Lichtstrahl - Lichtschranke
- 11, 11': Hebelanordnung-Hebel
- 13: Schubstange
- 15a, 15b: Führungsrollen
- 17: Hebelpunkt
- 19: Öffnung
- 21: Durchlassöffnung
- 23: Achse
- 25: Buchse
- 27: kapazitive Sensoranordnung31 Brühgetränke-Kapseln
- 33: Aussparung
- 35: erster Schenkel
- 37: zweiter Schenkel
- 39: Verlängerung

- K, K': Kipprichtung
- P: Schubrichtung
- S: vertikale Bewegungsrichtung
- V: vertikale Richtung
- X: Achse

## Patentansprüche

1. Getränkezubereitungsmaschine (1; 1') mit einem Aufnahmebereich (2; 2') zur Aufnahme mindestens eines ersten Ver- oder Entsorgungsbehälters (3; 3'), einer Sensoranordnung (7a, 7b; 7a', 7b') zur Erkennung eines Befüllungszustandes der Getränkezubereitungsmaschine (1; 1') in Bezug auf den ersten Ver- oder Entsorgungsbehälter (3; 3'), und mit einem in Abhängigkeit vom Befüllungszustand betätigbaren Hebel (11; 11'), der in einer bestimmten vordefinierten Stellung die Sensoranordnung (7a, 7b; 7a', 7b') so anregt, dass sie ein Erkennungssignal aktiviert, **dadurch gekennzeichnet, dass** der Hebel (11) durch das Gewicht des ersten Ver- oder Entsorgungsbehälters (3) betätigbar ist.

2. Getränkezubereitungsmaschine gemäß Anspruch 1, **gekennzeichnet durch** mindestens einen zweiten Ver- oder Entsorgungsbehälter (5; 5') im Aufnahmebereich (2; 2'), wobei die Sensoranordnung einen Befüllungszustand in Bezug auf den zweiten Ver- oder Entsorgungsbehälter (5; 5') erfasst.

3. Getränkezubereitungsmaschine gemäß einem der vorhergehenden Ansprüche, **gekennzeichnet durch** einen in Abhängigkeit von einer Füllhöhe des Inhalts des ersten Ver- oder Entsorgungsbehälters (3) betätigbaren Hebel (11).

4. Getränkezubereitungsmaschine gemäß einem der vorhergehenden Ansprüche, **gekennzeichnet durch** einen in Abhängigkeit von einer Positionierung des ersten Ver- oder Entsorgungsbehälters (3; 3') betätigbaren Hebel (11).

5. Getränkezubereitungsmaschine gemäß Anspruch 4, **gekennzeichnet durch** einen Hebel (11'), der beim Positionieren des ersten Ver- oder Entsorgungsbehälters (3') in dessen Bestimmungsposition **durch** ein Gehäuseteil des ersten Ver- oder Entsorgungsbehälters (3') betätigt wird.

6. Getränkezubereitungsmaschine gemäß einem der vorhergehenden Ansprüche, **gekennzeichnet durch** eine optische Sensoranordnung (7a, 7b; 7a', 7b'), in deren Messbereich (9) sich der Hebel (11) In der vordefinierten Stellung befindet.

7. Getränkezubereitungsmaschine gemäß Anspruch 6, **gekennzeichnet durch** eine Lichtschrankenanordnung als optische Sensoranordnung (7a, 7b; 7a', 7b'), die vom Hebel (11, 11') in der vordefinierten Stellung unterbrochen ist.

8. Getränkezubereitungsmaschine gemäß einem der vorhergehenden Ansprüche, **gekennzeichnet durch** eine kapazitive Sensoranordnung (27), die bevorzugt so ausgebildet ist, dass sie im Betrieb ein Vorhandensein von Flüssigkeiten, insbesondere Wasser, in ihrem Massbereich erfasst.

9. Getränkezubereitungsmaschine gemäß einem der vorhergehenden Ansprüche, **gekennzeichnet durch** einen zweiten Hebel, der in einer bestimmten vordefinierten Stellung die Sensoranordnung (7a, 7b; 7a', 7b') so anregt, dass sie ein Erkennungssignal aktiviert.

## Claims

1. Drink preparation machine (1; 1') having a receiving region (2; 2') for receiving at least a first supply or disposal container (3; 3'), a sensor assembly (7a, 7b; 7a', 7b') for detecting a fill state of the drink preparation machine (1; 1') in relation to the first supply or disposal container (3; 3') and having a lever (11; 11'), which can be actuated as a function of the fill state and when it is in a certain predefined position stimulates the sensor assembly (7a, 7b; 7a', 7b') so that it activates a detection signal, **characterised in that** the lever (11) can be actuated by the weight of the first supply or disposal container (3).

2. Drink preparation machine according to claim 1, **characterised by** at least a second supply or disposal container (5; 5') in the receiving region (2; 2'), the sensor assembly detecting a fill state in relation to the second supply or disposal container (5; 5').

3. Drink preparation machine according to one of the preceding claims, **characterised by** a lever (11), which can be actuated as a function of a fill level of the content of the first supply or disposal container (3).

4. Drink preparation machine according to one of the preceding claims, **characterised by** a lever (11), which can be actuated as a function of the positioning of the first supply or disposal container (3; 3') .

5. Drink preparation machine according to claim 4, **characterised by** a lever (11'), which is actuated by a housing part of the first supply or disposal container (3') when the first supply or disposal container (3') is positioned in its intended position.

6. Drink preparation machine according to one of the preceding claims, **characterised by** an optical sensor assembly (7a, 7b; 7a', 7b'), in the measuring range (9) of which the lever (11) is located when it is in the predefined position.

7. Drink preparation machine according to claim 6, **characterised by** a light barrier assembly as the optical sensor assembly (7a, 7b; 7a', 7b'), which is interrupted by the lever (11, 11') when it is in the predefined position.

8. Drink preparation machine according to one of the preceding claims, **characterised by** a capacitive sensor assembly (27), which is preferably configured so that it detects the presence of fluids, in particular water, in its measuring range during operation.

9. Drink preparation machine according to one of the preceding claims, **characterised by** a second lever, which when it is in a certain predefined position stimulates the sensor assembly (7a, 7b; 7a', 7b') so that it activates a detection signal.

## Revendications

1. Machine de préparation de boissons (1;1') comprenant une zone de logement (2 ; 2') pour loger au moins un premier réservoir d'alimentation ou de décharge (3 ; 3'), un agencement de capteur (7a, 7b ; 7a' ; 7b') destiné à identifier un état de remplissage de la machine de préparation de boissons (1 ; 1') en référence au premier réservoir d'alimentation ou de décharge (3 ; 3') et comprenant un levier (11 ; 11') actionnable en fonction de l'état de remplissage, lequel, dans une certaine position prédéfinie, excite l'agencement de capteur (7a, 7b ; 7a' ; 7b') de telle manière qu'il active un signal d'identification, **caractérisée en ce que** le levier (11) est actionnable en raison du poids du premier réservoir d'alimentation ou de décharge (3).

2. Machine de préparation de boissons selon la revendication 1, **caractérisée par** au moins un deuxième réservoir d'alimentation ou de décharge (5 ; 5') dans la zone de logement (2 ; 2'), l'agencement de capteur enregistrant un état de remplissage en référence au deuxième réservoir d'alimentation ou de décharge (5 ; 5').

3. Machine de préparation de boissons selon l'une quelconque des revendications précédentes, **caractérisée par** un levier (11) actionnable en fonction d'une hauteur de remplissage du contenu du premier réservoir d'alimentation ou de décharge (3).

4. Machine de préparation de boissons selon l'une quelconque des revendications précédentes, **caractérisée par** un levier (11) actionnable en fonction d'un positionnement du premier réservoir d'alimentation ou de décharge (3 ; 3').

5. Machine de préparation de boissons selon la revendication 4, **caractérisée par** un levier (11') qui, lors du positionnement du premier réservoir d'alimentation ou de décharge (3') dans sa position déterminée, est actionné par une partie de boîtier du premier réservoir d'alimentation ou de décharge (3').

6. Machine de préparation de boissons selon l'une quelconque des revendications précédentes, **caractérisée par** un agencement de capteur optique (7a, 7b ; 7a' ; 7b') dans la plage de mesure (9) duquel se trouve le levier (11) dans la position prédéfinie.

7. Machine de préparation de boissons selon la revendication 6, **caractérisée par** un dispositif à barrière lumineuse en tant qu'agencement de capteur optique (7a, 7b ; 7a' ; 7b'), qui est interrompu par le levier (11, 11') dans la position prédéfinie.

8. Machine de préparation de boissons selon l'une quelconque des revendications précédentes, **caractérisée par** un agencement de capteur capacitif (27) qui est réalisé de préférence de manière à ce qu'en fonctionnement, il détecte une présence de liquides, notamment d'eau, dans sa plage de mesure.

9. Machine de préparation de boissons selon l'une quelconque des revendications précédentes, **caractérisée par** un deuxième levier qui, dans une certaine position prédéfinie, excite l'agencement de capteur (7a, 7b ; 7a', 7b') de manière à ce qu'il active un signal d'identification.
